# EUROPÄISCHE PATENTSCHRIFT

(11) **EP 0 544 020 B1**
(45) Veröffentlichungstag und Bekanntmachung des Hinweises auf die Patenterteilung: **15.03.1995**
(21) Anmeldenummer: 91120000.4
(22) Anmeldetag: 23.11.1991
(51) Int. Cl.: G01D 5/38

(54) **Interferentielle Messeinrichtung**
Interferometric measuring device
Dispositif interférentiel de mesure

(43) Veröffentlichungstag der Anmeldung: 02.06.1993
(73) Patentinhaber: Dr. Johannes Heidenhain GmbH, D-83292 Traunreut (DE)
(72) Erfinder: Huber, Walter, W-8220 Traunstein (DE)

(56) Entgegenhaltungen:
- FR-A- 2 075 408
- GB-A- 2 241 780
- US-A- 3 482 107
- US-A- 3 630 624
- US-A- 3 891 321

## Beschreibung

Die Erfindung betrifft eine interferentielle Meßeinrichtung gemäß dem Oberbegriff des Anspruches 1.

Eine derartige Meßeinrichtung wird insbesondere bei einer Bearbeitungsmaschine oder Meßmaschine zur Messung der Relativlage von Objekten eingesetzt.

Aus der EP 0 163 362 B1 ist eine interferentielle Meßeinrichtung zur Messung der Relativlage zweier Objekte bekannt, bei der eine mit dem einen Objekt verbundene reflektierende Meßteilung von einer mit dem anderen Objekt verbundenen Abtasteinrichtung abgetastet wird, die eine Lichtquelle, einen Kollimator, eine Abtastteilung sowie drei Detektoren aufweist. Das von der Lichtquelle ausgehende und mittels des Kollimators kollimierte Lichtstrahlenbündel wird beim ersten Durchtritt durch die Abtastteilung in mehrere Beugungsstrahlen aufgeteilt, die an der Meßteilung unter Reflexion wiederum gebeugt werden. Die reflektierten Beugungsstrahlen gelangen sodann beim zweiten Durchtritt durch die Abtastteilung unter erneuter Beugung zur Interferenz. Die aus den interferierenden Beugungsstrahlen entstehenden resultierenden Beugungsstahlen 0., +1. und -1. Ordnung werden vom Kollimator getrennt und auf drei Detektoren zur Erzeugung von elektrischen Abtastsignalen zur Gewinnung von Meßwerten gelenkt.

Eine solche interferentielle Meßeinrichtung funktioniert bei Beleuchtung mit unpolarisiertem Licht jedoch nur solange gut, wie die polarisationsabhängigen Eigenschaften (z.B. selektive Absorption, Beugungswirkungsgrade und Doppelbrechung) der Abtastteilung und der Meßteilung vernachlässigbar sind. Bei einer Gitterkonstanten G≲4λ(λ=Schwerpunktswellenlänge des von der Lichtquelle ausgehenden Lichtstrahlenbündels) der beiden Teilungen ist dies jedoch nicht mehr der Fall, wodurch die gewünschte Intensitätsverteilung in die Beugungsstrahlen der einzelnen Beugungsordnungen und die Phasenbeziehungen zwischen den Beugungsstrahlen unterschiedlicher Beugungsordnungen nur für eine Polarisationsrichtung optimal eingestellt werden können.

Der Einsatz von polarisationsoptischen Elementen bei interferentiellen Meßeinrichtungen ist zwar aus der FR-A 2075408, US-A 3 482 107, US-A 3 630 624, US-A 3 891 321, sowie der GB-A 2241780 bekannt. Bei diesen Meßeinrichtungen dienen die polarisationsoptischen Elemente aber ausschließlich zur Erzeugung von gegeneinander phasenverschobenen Abtastsignalen, wogegen bei der Meßeinrichtung genannter Gattung die phasenverschobenen Abtastsignale bereits durch das Zusammenwirken von Meßteilung und Abtastteilung erzeugt werden.

Der Erfindung liegt die Aufgabe zugrunde, bei einer interferentiellen Meßeinrichtung der genannten Gattung mit einfachen Mitteln eine Optimierung der von den Detektoren gelieferten Abtastsignale zu erzielen.

Die mit der Erfindung erzielten Vorteile bestehen insbesondere darin, daß unter Ausnutzung der polarisationsabhängigen Eigenschaften der Teilungen mit Gitterkonstanten der vorgenannten Größenordnung durch Vorsehen von polarisationsoptischen Elementen an geeigneten Stellen im Lichtstrahlengang der Meßeinrichtung die Phasenbeziehungen, Modulationsgrade und Signalgrößen der von den Detektoren gelieferten Abtastsignale innerhalb gewisser Grenzen eingestellt und somit optimiert werden können, so daß sowohl die Meßgenauigkeit als auch die Zuverlässigkeit der Meßeinrichtung deutlich gesteigert werden können.

Vorteilhafte Weiterbildungen der Erfindung entnimmt man den abhängigen Patentansprüchen.

Ein Ausführungsbeispiel der Erfindung wird anhand der Zeichnung näher erläutert.

Es zeigen
- Figur 1: eine erste interferentielle Meßeinrichtung und
- Figur 2: eine zweite interferentielle Meßeinrichtung.

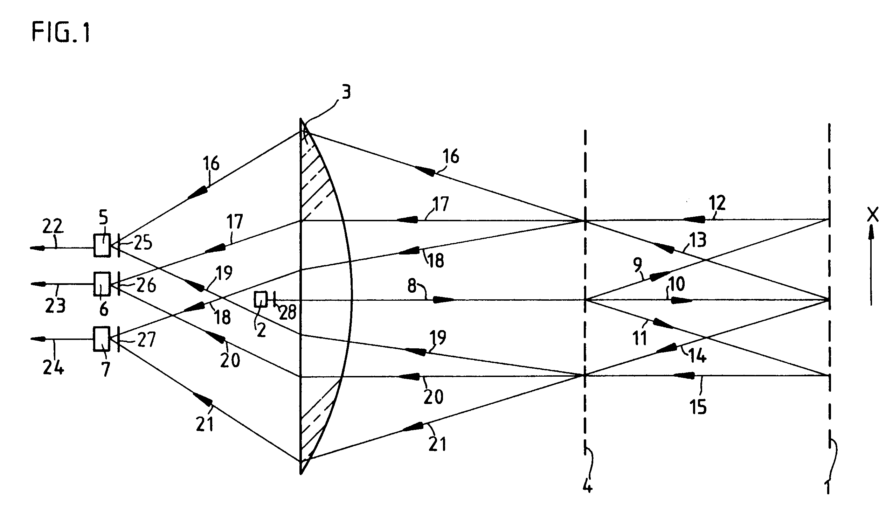

In Figur 1 ist eine erste interferentielle Meßeinrichtung zur Messung der Relativlage zweier nicht dargestellter Objekte gezeigt, bei der eine mit dem einen Objekt verbundene reflektierende Meßteilung 1 mittels Lichtstrahlenbeugung von einer Abtasteinrichtung abgetastet wird, die eine Beleuchtungseinheit, bestehend aus einer Lichtquelle 2 und aus einem Kollimator 3, eine Abtastteilung 4 sowie drei Detektoren 5, 6, 7 aufweist. Ein von der Lichtquelle 2 ausgehendes und vom Kollimator 3 kollimiertes Lichtstrahlenbündel 8 wird beim Durchtritt durch die Abtastteilung 4, deren Teilungsstriche senkrecht zur Meßrichtung X verlaufen, in mehrere Beugungsstrahlen aufgeteilt, von denen ein Beugungsstrahl 9 (+1.Ordnung), ein Beugungsstrahl 10 (0.Ordnung) und ein Beugungsstrahl 11 (-1.Ordnung) dargestellt sind.

Diese Beugungsstrahlen 9, 10, 11 werden sodann von der Meßteilung 1 unter Reflexion erneut gebeugt; die Teilungsstriche der Meßteilung 1 verlaufen ebenfalls senkrecht zur Meßrichtung X und parallel zu den Teilungsstrichen der Abtastteilung 4. Die Meßteilung 1 spaltet jeden Beugungsstrahl 9, 10, 11 in einen reflektierten Beugungsstrahl (+1.Ordnung) und in einen reflektierten Beugungsstrahl (-1.Ordnung) auf.

Es werden somit der Beugungsstrahl 9 (+1.Ordnung) in einen reflektierten Beugungsstrahl 12 (-1.Ordnung) - der für das Verständnis des Meßprinzipes nicht benötigte reflektierte Beugungsstrahl (+1.Ordnung) ist der Übersicht halber nicht dargestellt -, der Beugungsstrahl 10 (0.Ordnung) in einen reflektierten Beugungsstrahl 13 (+1.Ordnung) und in einen reflektierten Beugungsstrahl 14 (-1.Ordnung) sowie der Beugungsstrahl 11 (-1.Ordnung) in einen reflektierten Beugungsstrahl 15 (+1.Ordnung) - der für das Verständnis des Meßprinzipes nicht benötigte reflektierte Beugungsstrahl (-1. Ordnung) ist ebenfalls nicht dargestellt - aufgespalten.

Die reflektierten Beugungsstrahlen 12, 13, 14, 15 durchsetzen anschließend wiederum die Abtastteilung 4 und gelangen unter erneuter Beugung zur Interferenz. Es entstehen somit hinter der Abtastteilung 4 aus den interferierenden reflektierten Beugungsstrahlen 12, 13 ein resultierender Beugungsstrahl 16 (+1.Ordnung), ein resultierender Beugungsstrahl 17 (0.Ordnung) sowie ein resultierender Beugungsstrahl 18 (-1.Ordnung) und aus den interferierenden reflektierten Beugungsstrahlen 14, 15 ein resultierender Beugungsstrahl 19 (+1.Ordnung), ein resultierender Beugungsstrahl 20 (0.Ordnung) sowie ein resultierender Beugungsstrahl 21 (-1.Ordnung).

Mittels des Kollimators 3 werden die beiden resultierenden Beugungsstrahlen 16, 19 (+1.Ordnung) auf den Detektor 5 zur Erzeugung eines Abtastsignals 22, die beiden resultierenden Beugungsstrahlen 17, 20 (0.Ordnung) auf den Detektor 6 zur Erzeugung eines Abtastsignals 23 und die beiden resultierenden Beugungsstrahlen 18, 21 (-1.Ordnung) auf den Detektor 7 zur Erzeugung eines Abtastsignals 24 gelenkt. Die drei Abtastsignale 22, 23, 24 weisen vorzugsweise einen gegenseitigen Phasenversatz von 120° auf und dienen der Gewinnung von Meßwerten für die Relativlage der beiden Objekte in Meßrichtung X.

Erfindungsgemäß ist zur Optimierung der von den Detektoren 5, 6, 7 gelieferten Abtastsignale 22, 23, 24 wenigstens ein polarisationsoptisches Element (25-32) im Lichtstrahlengang vorgesehen.

Durch ein dem Detektor 6 für die 0.Ordnung vorgeschaltetes lineares Polarisationsfilter 26 oder Polarisationsprisma kann bei dem vom Detektor 6 gelieferten Abtastsignal 23 der Modulationsgrad verbessert und der Oberwellenanteil der 2. Harmonischen minimiert werden.

Durch das Vorschalten eines linearen Polarisationsfilters 25 oder eines Polarisationsprismas vor den Detektor 5 für die +1.Ordnung und eines linearen Polarisationsfilters 27 oder eines Polarisationsprismas vor den Detektor 7 für die -1.Ordnung können die Phasenlagen der zugehörigen Abtastsignale 22, 24 optimal eingestellt bzw. feinjustiert werden. Dabei kann das von der Lichtquelle 2 ausgehende Lichtstrahlenbündel 8 unpolarisiert oder mittels eines nachgeschalteten zirkularen Polarisationsfilters 28 zirkular polarisiert sein.

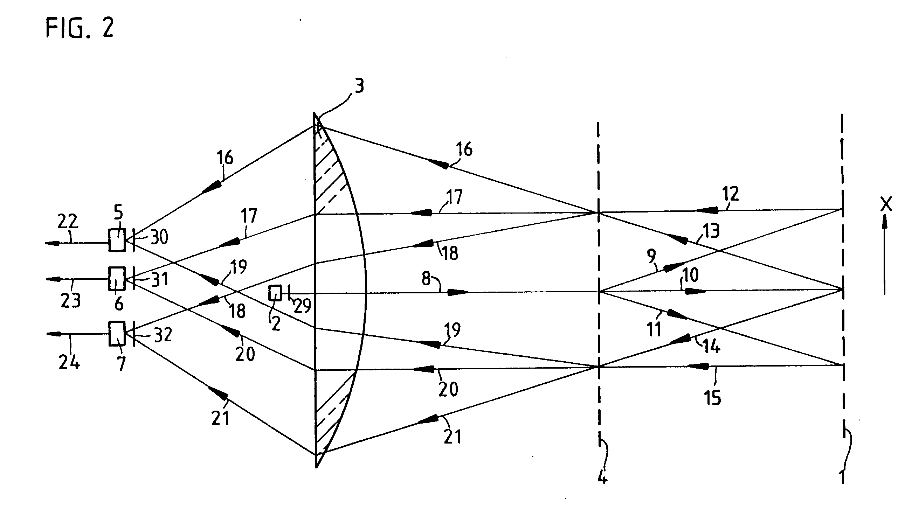

In Figur 2 ist eine zweite interferentielle Meßeinrichtung gezeigt, deren mit der ersten Meßeinrichtung nach Figur 1 übereinstimmende Elemente das gleiche Bezugszeichen aufweisen. Das von der Lichtquelle 2 der Beleuchtungseinheit ausgehende Lichtstrahlenbündel 8 ist mittels eines nachgeschalteten linearen Polarisationsfilters 29 oder eines Polarisationsprismas linear polarisiert. Mit dieser Maßnahme können sowohl die Modulationsgrade verbessert als auch der Oberwellenanteil der 2. Harmonischen bei den von den Detektoren 5-7 gelieferten Abtastsignalen 22-24 minimiert werden.

Durch das zusätzliche Vorschalten jeweils eines linearen Polarisationsfilters 30-32 oder eines Polarisationsprismas vor die Detektoren 5-7 können die Signalamplituden der von den Detektoren 5-7 gelieferten Abtastsignale 22-24 gegenseitig optimal eingestellt werden.

Eine besonders ausgeprägte Abhängigkeit von Phasenbeziehungen und Modulationsgraden bei den von den Detektoren 5-7 gelieferten Abtastsignalen 22-24 von der Lage der Polarisationsebene kann dadurch erreicht werden, daß das Steg-/Lückenverhältnis der Abtastteilung 4 größer als 1 gewählt wird.

In nicht gezeigter Weise kann der Lichtquelle 2 der Beleuchtungseinheit ein polarisationsoptisches Element in Form eines Polarisationsstrahlteilers zur Aufteilung des Lichtstrahlenbündels 8 in zwei zueinander senkrecht polarisierte Teilstrahlenbündel nachgeschaltet sein, wobei der Polarisationsstrahlteiler vorzugsweise ein Wollastonprisma ist; es können somit auch mehr als drei Abtastsignale erzeugt werden.

Die Erfindung ist bei Meßsystemen für wenigstens eine Meßrichtung anwendbar, und zwar gleichermaßen für solche nach dem Durchlicht- und Auflichtprinzip.

## Patentansprüche

1. Interferentielle Meßeinrichtung zur Messung der Relativlage von Objekten, bei der eine Meßteilung (1) mittels Lichtstrahlenbeugung von einer Abtasteinrichtung abtastbar ist, indem die Meßteilung (1) von einer Beleuchtungseinheit (2) durch eine Abtastteilung (4) beleuchtbar ist, so daß ein Bild der Meßteilung (1) mit der Abtastteilung (4) zusammenwirkt, wobei die Meßeinrichtung mehrere Detektoren (5, 6, 7) zum Detektieren von Gruppen verschiedener Beugungsordnungen des Interferenzbildes aufweist und die Abtastteilung (4) so ausgebildet ist, daß eine Phasentrennung zwischen den von den Detektoren (5, 6, 7) detektierten Gruppen der Beugungsordnungen bewirkt wird, dadurch gekennzeichnet, daß die Meßteilung (1) und/oder die Abtastteilung (4) eine Gitterkonstante G≲4λ(mit λ = Schwerpunktswellenlänge des von der Lichtquelle ausgehenden Lichtstrahlenbündels) aufweist, und daß zur Beeinflussung der durch das Zusammenwirken von Meßteilung (1) und Abtastteilung (4) erzeugten gegeneinander phasenverschobenen Beugungsstrahlen (16, 19; 17, 20; 18, 21) wenigstens ein polarisationsoptisches Element (25-32) im Lichtstrahlengang vorgesehen ist.

2. Meßeinrichtung nach Anspruch 1, dadurch gekennzeichnet, daß wenigstens einem Detektor (5-7) ein polarisationsoptisches Element (25-27; 30-32) vorgeschaltet ist.

3. Meßeinrichtung nach Anspruch 2, dadurch gekennzeichnet, daß der Lichtquelle (2) der Beleuchtungseinheit ein polarisationsoptisches Element (28) in Form eines Zirkularpolarisators nachgeschaltet ist.

4. Meßeinrichtung nach Anspruch 1 oder 2, dadurch gekennzeichnet, daß der Lichtquelle (2) der Beleuchtungseinheit ein polarisationsoptisches Element (29) in Form eines linearen Polarisationsfilters oder eines Polarisationsprismas nachgeschaltet ist.

5. Meßeinrichtung nach Anspruch 1 oder 2, dadurch gekennzeichnet, daß der Lichtquelle (2) der Beleuchtungseinheit ein polarisationsoptisches Element in Form eines Polarisationsstrahlteilers zur Aufteilung des Lichtstrahlenbündels (8) in zwei zueinander senkrecht polarisierte Teilstrahlenbündel nachgeschaltet ist.

6. Meßeinrichtung nach Anspruch 5, dadurch gekennzeichnet, daß der Polarisationsstrahlteiler ein Wollaston-Prisma ist.

7. Meßeinrichtung nach Anspruch 2, dadurch gekennzeichnet, daß das polarisationsoptische Element (25-27; 30-32) aus einem linearen Polarisationsfilter oder aus einem Polarisationsprisma besteht.

8. Meßeinrichtung nach einem der vorhergehenden Ansprüche, dadurch gekennzeichnet, daß die Meßteilung (1) und die Abtastteilung (4) aus Phasengittern bestehen.

9. Meßeinrichtung nach Anspruch 8, dadurch gekennzeichnet, daß das Steg-/Lückenverhältnis der Abtastteilung (4) größer als 1 ist.

## Claims

1. An interferometric measuring device for measuring the relative position of two objects, in which a measuring scale (1) can be sensed by means of diffraction of light beams by a sensing device, in that the measuring scale (1) can be illuminated by an illuminating unit (2) through a sensing scale (4), so that an image of the measuring scale (1) cooperates with the sensing scale (4), wherein the measuring device comprises a plurality of detectors (5, 6, 7) for detecting groups of different diffraction orders of the interference image and the sensing scale (4) is so formed that phase separation occurs between the groups of the diffraction orders detected by the detectors (5, 6, 7), characterized in that the measuring scale (1) and/or the sensing scale (4) have a grating constant G < 4λ (where λ = the mean wavelength of the bundle of light rays emitted by the light source) and in that at least one optically polarising element (25-32) is provided in the light beam path to affect the mutually phase displaced diffraction beams (16, 19; 17, 20; 18, 21) generated by the cooperation of the measuring scale (1) and the sensing scale (4).

2. A measuring device according to claim 1, characterized in that at least one detector (5-7) is preceded by' an optically polarising element (25-27; 30-32).

3. A measuring device according to claim 2, characterized in that the light source (2) of the illuminating unit is followed by an optically polarising element (28) in the form of a circular polariser.

4. A measuring device according to claim 1 or 2, characterized in that the light source (2) of the illuminating unit is followed by an optically polarising element (29) in the form of a linear polarising filter or a polarising prism.

5. A measuring device according to claim 1 or 2, characterized in that the light source (2) of the illuminating unit is followed by an optically polarising element in the form of a polarising beam splitter for splitting the bundle of light rays (8) into two component ray bundles polarised perpendicular to one another.

6. A measuring device according to claim 5, characterized in that the polarising beam splitter is a Wollaston prism.

7. A measuring device according to claim 2, characterized in that the optically polarising element (25-27; 30-32) consists of a linear polarising filter or a polarising prism.

8. A measuring device according to any of the preceding claims, characterized in that the measuring scale (1) and the sensing scale (4) consists of phase gratings.

9. A measuring device according to claim 8, characterized in that the mark-space ratio of the sensing scale (4) is greater than 1.

## Revendications

1. Dispositif de mesure interférentiel pour la mesure de la position relative d'objets, dans lequel une graduation de mesure (1) est lue par diffraction de rayons lumineux au moyen d'un dispositif de lecture, la graduation de mesure (1) étant éclairée par une unité d'éclairage (2) au travers d'une graduation de lecture (4) de manière telle qu'une image de la graduation de mesure (1) coopère avec la graduation de lecture (4), le dispositif de mesure comportant plusieurs détecteurs (5, 6, 7) aux fins de détecter des groupes d'ordres de diffraction différents dans l'image obtenue par interférence et la graduation de lecture (4) étant agencée de manière à provoquer une séparation de phases entre les groupes d'ordres de diffraction détectés par les détecteurs (5, 6, 7), caractérisé par le fait que la graduation de mesure (1) et/ou la graduation de lecture (4) présentent une constante de réseau G < 4λ (avec λ = longueur d'onde principale du faisceau de rayons lumineux provenant de la source lumineuse) et par le fait qu'il est prévu sur la marche des rayons lumineux au moins un élément (25-32) optique polariseur pour agir sur les rayons diffractés (16, 19; 17, 20; 18, 21) mutuellement déphasés produits par l'action combinée de la graduation de mesure (1) de la graduation de lecture (4).

2. Dispositif selon la revendication 1, caractérisé par le fait qu'un élément optique polariseur (25-27; 30-32) est placé devant au moins un détecteur (5-7).

3. Dispositif selon la revendication 2, caractérisé par le fait qu'un élément optique polariseur (28) qui se présente sous la forme d'un polariseur circulaire est placé derrière la source lumineuse (2) de l'unité d'éclairage.

4. Dispositif selon la revendication 1 ou la revendication 2, caractérisé par le fait qu'un élément optique polariseur (29) qui se présente sous la forme d'un filtre polariseur linéaire ou d'un prisme polariseur est placé derrière la source lumineuse (2) de l'unité d'éclairage.

5. Dispositif selon la revendication 1 ou la revendication 2, caractérisé par le fait qu'un élément optique polariseur (29) qui se présente sous la forme d'une lame séparatrice polarisante destinée à diviser le faisceau (8) de rayons lumineux en deux faisceaux partiels polarisés à angle droit l'un par rapport à l'autre est placée derrière la source lumineuse (2) de l'unité d'éclairage.

6. Dispositif de mesure selon la revendication 5, caractérisé par le fait que la lame séparatrice polarisante est un prisme de Wollaston.

7. Dispositif selon ou la revendication 2, caractérisé par le fait que l'élément optique polariseur (25-27; 30-32) se compose d'un filtre polariseur linéaire ou d'un prisme polariseur.

8. Dispositif selon l'une de revendications précédentes, caractérisé par le fait que la graduation de mesure (1) et la graduation de lecture (4) sont constituées par des réseaux de phase.

9. Dispositif selon la revendication 8, caractérisé par le fait que le rapport barrette/creux de la graduation de lecture est supérieur à 1.
